# EUROPEAN PATENT APPLICATION

(11) **EP 4 512 567 A1**
(43) Date of publication of application: **26.02.2025**
(21) Application number: 23193091.8
(22) Date of filing: 24.08.2023
(51) Int. Cl.: B23K 26/04, B23K 26/0622, B23K 26/06, B23K 26/082, B23K 26/08, B23K 26/36

(54) **A SYSTEM FOR FORMING A THREE-DIMENSIONAL CAVITY AND A METHOD FOR FORMING A THREE-DIMENSIONAL CAVITY**

(71) Applicant: Valstybinis Moksliniu Tyrimu Institutas Fiziniu Ir Technologijos Mokslu Centras, 02300 Vilnius (LT)
(72) Inventor: Zemaitis, Andrius, Vilnius (LT); Gecys, Paulius, Vilnius (LT); Gedvilas, Mindaugas, Vilnius (LT)
(74) Representative: Pakeniene, Ausra

(57) **Abstract**

The invention is related to efficient laser ablation to remove material at a high rate, where the throughput is more than an order of magnitude higher than conventional laser ablation. The invention also relates to the high machining quality and the resulting low surface roughness, with the smoothness of the laser-milled cavity bottom surface being equivalent to the original surface smoothness of the mirror-polished material. The invention also relates to the repeated removal of a small sub-layer depth in a single scan, thereby in layer-by-layer multi-scan removing the total thickness of the material to any desired depth. To maintain efficient ablation machining conditions, the milling of each sub-layer is performed by refocusing or partially refocusing the laser beam each time on the bottom of the increasing depth of the milled cavity. The milling technology can be used to form cavities of any complex three-dimensional shape.

## Description

### TECHNICAL FIELD

The present invention relates to a system and a method for forming a three-dimensional cavity in a body of opaque material by laser-irradiation, and in particular to a system and a method for layer-by-layer milling of a body of opaque material by laser-irradiation.

### BACKGROUND ART

Milling from the top side of a specimen using conventional laser ablation is a well-known technology. Laser ablation of opaque or partially opaque materials at laser wavelengths has several advantages over other methods of removing the material, such as chemical etching or mechanical milling.

The main advantage of this technology is that laser ablation is a non-contact method, as only the laser light interacts with the material to be machined and the process does not involve the use of any environmentally harmful chemicals or fast-wearing mechanical parts of the cutter.

Laser milling technology can be used to produce cavities of any complex shape in the sublayer. However, conventional laser ablation from the top side of the sample has three main disadvantages: (i) the material removal performance of conventional laser machining is still not comparable to that of mechanical milling; (ii) the roughness of the machined surface is sufficiently high using conventional laser ablation and the roughness is increased compared to the initial roughness of the unmachined surface; (iii) the depth of material removal in a single laser scan is sufficiently low and therefore not suitable for the formation of deep three-dimensional cavities.

European patent No. EP1353773B1 discloses a method and apparatus for laser milling, which involves using a laser to remove material from a substrate to create a desired pattern or structure. The method includes focusing a laser beam onto a target area of the substrate and controlling the intensity, duration, and position of the laser beam to achieve the desired milling effect. The apparatus includes a laser source, a focusing lens, and a computer-controlled stage for positioning the substrate. The main disadvantage of the disclosed method is uncontrolled laser spot size and fluence.

US patent application No. US11/290,208 (publication No. US20070062917A1) discloses a method and apparatus for laser cutting with a complex laser beam spot control comprising different laser beam placements in perpendicular directions, a TEM00 mode in one direction, and a multimode beam in the other perpendicular direction, and a resultant material cutting performance. The main disadvantage of the disclosed invention is complex laser beam spot control.

US patent No. US2538638 discloses a mold for the manufacture of a reflector, with the intended internal reflection of light and backward reflection of the light source. The main disadvantage of the disclosed invention is that the secondary optics allow for total internal reflection.

The present invention is dedicated to overcoming the above shortcomings and producing further advantages over the prior art.

### BRIEF DESCRIPTION OF THE INVENTION

The invention discloses a system for forming a three-dimensional cavity. The system comprises an ultrashort laser radiation source, a laser beam with Gaussian transverse intensity distribution, at least one highly reflective laser mirror, a beam diameter expander or telescope for the control of the beam diameter, an optical focusing lens. The system further comprises a computer-controlled galvanometric scanner and/or a computer-controlled stage.

The invention also discloses a method for forming a three-dimensional cavity. The method comprises multilayer ablation of a body of opaque material comprising repeated bidirectional or unidirectional laser beam scanning along the surface of the body of opaque material for removal of multiple layers of the opaque material. The laser beam control comprises focusing or partially focusing the laser beam on the surface of the body of opaque material surface, defocusing the laser beam and subsequently refocusing on a new surface forming a bottom of the three-dimensional cavity after a layer of the opaque material is removed.

The focusing or partial focusing as well as refocusing or partial refocusing of the laser beam on a surface of the body of the opaque material comprises controlling the laser spot size of the laser beam and its related laser energy density on the surface of the body of the opaque material by adjusting the focusing lens position vertically with respect to the body surface for milling, or by adjusting body position in the vertical direction with respect to the focusing lens using a computer-controlled linear stages. During ablation of a layer of opaque material either the laser beam is translated along the surface of the body of opaque material, or the body of opaque material is translated horizontally and perpendicularly to the laser beam.

The defocus control of the laser beam is utilized by shifting position of the spot of the laser beam by moving the body of the opaque material horizontally in a perpendicular direction to the laser beam after exiting the focusing lens, or moving a computer-controlled galvanometer scanner and the optical focusing lens horizontally with respect to milled surface of the body, and/or altering the laser beam collimation with respect to the optical focusing lens.

Said focusing or partial focusing, scanning, defocusing and refocusing or partial refocusing and scanning is repeated for removal of each subsequent layer of opaque material.

### BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:

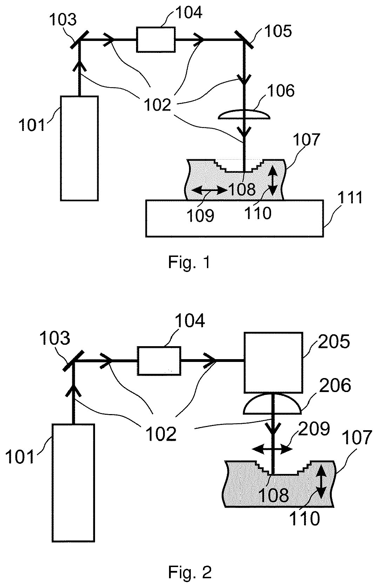

Fig. 1 shows a principal diagram of the embodiment of the system for forming a three-dimensional cavity according to the invention.
Fig. 2 shows a block diagram of another embodiment of the system for forming a three-dimensional cavity according to the invention.
Fig. 3 a)-f) shows a cross-sectional side view of a body of an opaque material at different numbers of removed layers forming a cavity with a complex shape.
Fig. 4 shows a three-dimensional view of a body of an opaque material at different numbers of removed layers forming a cavity with a complex shape.
Fig. 5 shows a cross-sectional side view of a triangular shape cavity in a body of an opaque material at a different number of layers.
Fig. 6 shows a cross-sectional side view of various cavity shapes in a body of an opaque material.
Fig. 7 shows a three-dimensional view of a milled single-layer rectangular cavity.
Fig. 8 shows a top view of bidirectional laser beam spot scanning trajectories and schemes of partially overlapping laser pulses at different pulse and line overlaps.
Fig. 9 shows the top view of unidirectional laser beam spot scanning trajectories and schemes of partially overlapping laser pulses at different pulse and line overlaps.
Fig. 10 shows a side view of a laser-milled single-layer cavity with different finishing qualities.
Fig. 11 shows a CNC-milled mold blank designed for laser milling of LED diffuser mold at different projections.
Fig. 12 shows a CNC-milled mold blank with laser-milled cavities designed for LED diffuser mold at different projections.
Fig. 13 shows de-molded LED diffuser parts at different projections.
Fig. 14 shows Gaussian beam focusing by lens and fluence level variation at different focusing heights.
Fig. 15 shows a plot of normalized laser pulse energy per ablated volume dependence on the normalized laser fluence.

Preferred embodiments of the invention will be described herein below concerning the drawings. Each figure contains the same numbering for the same or equivalent element.

### DETAILED DESCRIPTION OF THE INVENTION

It should be understood that numerous specific details are presented to provide a complete and comprehensible description of the invention embodiment. However, the person skilled in the art will understand that the embodiment examples do not limit the application of the invention which can be implemented without these specific instructions. Well-known methods, procedures, and components have not been described in detail for the embodiment to avoid misleading. Furthermore, this description should not be considered to be constraining the invention to given embodiment examples but only as one of the possible implementations of the invention.

Throughout the description term "focused" conveys the condition for a laser beam, when the laser beam is working in focus, with the maximum possible energy density and intensity. Throughout the description term "partially focused" conveys the condition for a laser beam, when working outside the focal plane, with a lower energy density. The energy density is chosen such that rapid material removal occurs.

The invention discloses a system for forming a three-dimensional cavity. The system comprises an ultrashort laser radiation source (101) for producing a laser beam (102), at least one highly reflective laser mirror (103, 105), laser beam (102) diameter control means (104), an optical focusing lens (106, 206), means (205, 206, 111) for control of laser beam spot (108) positioning on the body (107) of opaque material in horizontal direction (109, 209) and means (106, 206, 111) for laser beam (102) focusing, partial focusing, refocusing or partial refocusing on the body (107) of opaque material.

The ultrashort laser radiation source (101) is such that can generate a particular type of ultrashort laser irradiation, for example, nanosecond, picosecond, and femtosecond pulses, burst mode, or hybrid nanosecond-picosecond pulses.

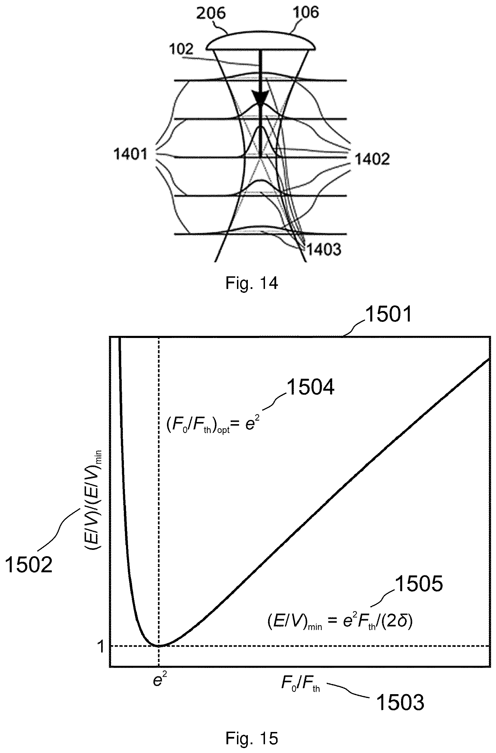

The laser beam (102) is such that has Gaussian transverse intensity distribution. An example of the laser beam (102) focusing is shown in Fig. 14. The Gaussian laser beam (102) focusing, partial focusing, refocusing or partial refocusing for adjusting dependent fluence level (1402) and laser beam spot (108) diameter (1403) is achieved using a focusing lens (106, 206) by adjusting the focusing lens (106, 206) position vertically (110) with respect to the body (107) surface position (1401) for milling, or by adjusting body (107) surface position (1401) in the vertical direction (110) with respect to the focusing lens (106, 206) using a computer-controlled linear stages (111). The adjustment of the focusing lens (106, 206) position in the vertical direction (110) for the adjustment of fluence level (1402) is considered equal to the adjusting opaque material (107) body position in the vertical direction (110). The highest fluence is achieved in the center of the Gaussian beam and focal center. The weaker fluence is achieved with increasing transverse distance from the center of the beam and with increasing distance from the focal position. In all embodiments of the invention, only a simple standard Gaussian beam mode TEM00 is used.

The at least one highly reflective laser mirror (103, 105) guides the laser beam (102) toward the body (107) of opaque material. When the system comprises only one reflective mirror (103), being a first reflective mirror (103), the reflective mirror (103) is an optical mirror with an average reflectivity across the required region of more than 99%. When the system comprises a second reflective mirror (105), the reflective mirror (105) is also an optical mirror with an average reflectivity across the required region of more than 99%.

The laser beam (102) diameter control means (104) such as a beam diameter expander or a telescope for the control of the beam diameter. The laser beam diameter control means (104) is placed in the path of the laser beam (102) between the first reflective mirror (103) and the second reflective mirror (105), when the system comprises the first reflective mirror (103) and the second reflective mirror (105), o between the first reflective mirror (103) and the computer-controlled galvanometric scanner (205), when the system comprises only the first reflective mirror (103), to control the diameter of the laser beam (102) on the optical focusing lens (106). The laser beam (102) diameter control means (104) is a system, comprising a combination of prisms, or diffractive optical elements, or a telescope consisting of lenses for adjusting the diameter of the emitted laser beam (102).

The optical focusing lens (106) when the system comprises the first reflective mirror (103) and the second reflective mirror (105), may be a lens, a system of lenses, or an optical lens that is transparent or partially transparent to laser radiation, such as a spherical lens, an aspherical lens, or a high numerical aperture microscope objective.

The optical focusing lens (206) when the system comprises the first reflective mirror (103) and the computer-controlled galvanometric scanner (205) is such as a field flattening, f-theta, or telecentric lens, for use with the computer-controlled galvanometric scanner (205). They are specially designed to use a moving beam by a galvanometer scanner mirrors on the lens which passes through the lens system and moves along the flat surface of the sample.

The means (205, 206, 111) for control of laser beam spot (108) positioning on the body (107) of opaque material in horizontal direction (109, 209) on the body (107) of opaque material for defocusing or scanning and ablation is either the computer-controlled galvanometric scanner (205) together with an optical focusing lens (206) when the system comprises only the first reflective mirror (103) out of two reflective mirrors (103, 105), or a computer-controlled stage (111) when the system comprises the first reflective mirror (103) and the second reflective mirror (103) out of two reflective mirrors (103, 105).

The means (106, 206, 111) for adjusting laser beam (102) focus on the body (107) of opaque material for focusing, partial focusing, refocusing and partial refocusing is either the vertically repositionable focusing lens (106, 206), or the computer-controlled stage (111) configured for vertical repositioning of the body (7).

The computer-controlled galvanometric scanner (205) comprises a computer, software, a controller, and a laser scanning module with two galvanometers for positioning the laser beam (102) in two dimensions.

The computer-controlled stage (111) comprises a computer, software, controller, and two perpendicularly mounted linear stages also called translation stages, components of a precise motion system used to position the body (107) to a two-axis of motion. The computer-controlled stage (111) may also comprise means to position the body (107) in vertical direction.

For translation of the laser beam spot (108) in horizontal direction (209), the computer-controlled galvanometer scanner (205) together with the focusing lens (206) is usually used for large three-dimensional cavity formation. The computer-controlled galvanometer scanner (205) has a much larger scanning speed, however, smaller precision than the computer-controlled stage (111). For translation of the laser beam spot (108) in horizontal direction (109) a computer-controlled stage (111) is usually used for small microcavity formation. The computer-controlled stage (111) has less speed, however, greater precision than the computer-controlled galvanometer scanner (205).

The dimensions of the system according to the invention may range from several cubic decimeters to several cubic meters depending on the size of the three-dimensional cavity to be milled. The laser beam (102) parameters (laser power, pulse repetition rate, wavelength, beam quality, energy density), the laser beam (102) scanning parameters (beam scanning speed, beam spot size, pulse overlap, scan line spacing), together with the opaque material parameters to be processed (ablation threshold, accumulation coefficient), are determined for that particular laser processing system and the particular opaque material, are selected in such a way as to ensure efficient ablation.

The method for forming a three-dimensional cavity comprises multiple bidirectional or unidirectional laser beam (102) scans along surface of the body (107) of opaque material for removal of multiple layers of the opaque material by one layer per scan. The laser beam (102) emitted from the laser radiation source (101) is first diverted by the first reflective mirror (103) towards the laser beam (102) diameter control means (104). When the laser beam passes the laser beam (102) diameter control means (104) the diameter of the laser beam (102) increases or decreases by a number of times, depending on the parameters of the laser beam (102) diameter control means (104). Afterwards, the laser beam (102) is diverted a second time either by a second reflective laser mirror (105) or by the computer-controlled galvanometric scanner (205) towards the optical focusing lens (106, 206). The laser beam (102) is then focused into a spot (108) on the body (107) of opaque material for scanning for removal of a layer of opaque material causing ablation of the material and removing a precisely defined volume of matter. The scanning direction of the laser beam spot (108) is perpendicular to the direction of propagation of the laser beam (102) after the laser beam (102) exits the focusing lens (106, 206). Ablation occurs when the laser energy density exceeds the material removal threshold energy density. During ablation of each layer of the opaque material either the laser beam spot (108) is translated horizontally (209) along the surface of the body (107) of opaque material, or the body (107) of opaque material is translated horizontally (109) and perpendicularly to the laser beam (102).

After a layer of the opaque material is removed the laser beam (102) is defocused by repositioning the laser beam spot (108) in a horizontal direction (109, 209) on the body (107) of opaque material for a subsequent milling step for milling a subsequent layer of the opaque material. After the defocusing and repositioning step the laser beam (102) is refocused or partially refocused on the new surface of the body (107) of the opaque material after removing a layer of the opaque material for the subsequent scanning step by adjusting the focusing lens (106, 206) position vertically (110) with respect to the body (107) surface for milling, or by adjusting body (107) position (1401) in the vertical direction (110) with respect to the focusing lens (106, 206). The body (107) of opaque material is again scanned with the laser beam spot (108) where the scanning direction is perpendicular to the direction of propagation of the laser beam (102) after the laser beam exits the focusing lens (106, 206) and the laser energy density exceeds the material removal threshold energy density. Said focusing or partial focusing, scanning, defocusing and refocusing or partial refocusing and scanning is repeated for removal of each subsequent layer of opaque material.

The focusing or partial focusing as well as refocusing or partial refocusing of the laser beam (102) on a surface of the body (107) of the opaque material comprises controlling the laser spot (108) size of the laser beam (102) and its related laser energy density on the surface of the body (107) of the opaque material by adjusting the focusing lens (106, 206) position vertically (110) with respect to the body (107) surface for milling, or by adjusting body (107) position (1401) in the vertical direction (110) with respect to the focusing lens (106, 206) using a computer-controlled linear stages (111).

The defocus control of the laser beam (102) is utilized shifting position of the spot (108) of the laser beam (102) by moving the body (107) of the opaque material horizontally (109) in a perpendicular direction to the laser beam (102) after the laser beam (102) exits the focusing lens (106), or moving the computer-controlled galvanometer scanner (205) and the optical focusing lens (206) horizontally (209) with respect to milled surface of the body (107), and/or altering the laser beam (102) collimation with respect to the optical focusing lens (106, 206).

Ablation efficiency is defined as the ratio of the volume of material removed to the laser pulse energy. Efficient ablation is defined as the removal of the maximum volume of material per unit of laser pulse energy, or in other words the maximum of the ablation efficiency curve. To reach efficient ablation with the maximal material removal rate per pulse energy the laser fluence needs to be optimal, which is 7.39 times larger than the ablation threshold of the opaque material. The maximal ablated volume of an opaque material per laser pulse is 1.57 times larger than the effective ablation depth multiplied by the laser beam (102) spot (108) diameter squared. At that point, volumetric removal to the opaque material is initiated at the surface of the body (107) of opaque material. The removal thickness per layer depends on a wide range of laser processing parameters and parameters of the material to be machined. This can range from a few nanometers to tens of micrometers, or even millimeters when working with very powerful lasers.

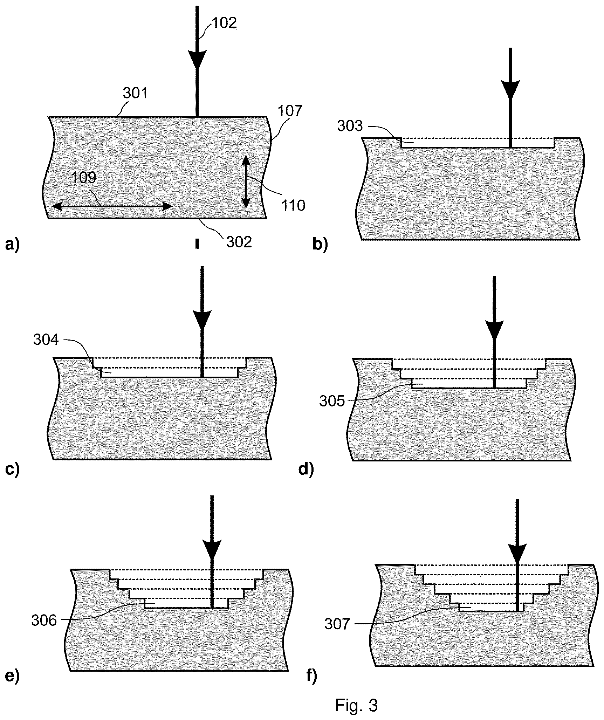

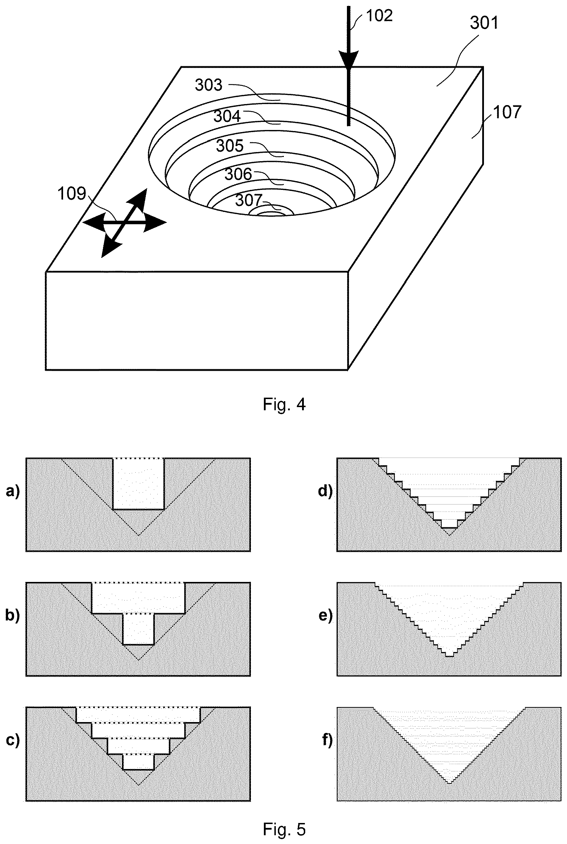

The layer-by-layer milling with complex shape cavities is shown in Fig. 3 and Fig. 4. A fragment of the body (107) of opaque material with an upper surface (301) and a lower surface (302) is moved at a given beam (102) scanning speed relative to the incident laser beam (102). The direction of the velocity is perpendicular to the direction of the incident laser beam (102). The body (107) of the opaque material is moved in the direction of motion parallel to the upper (301) and lower (302) planes of the substrate. The laser beam (102) is focused or partially focused on the surface of the body (107) of the opaque material. As the body (107) of the opaque material moves at a speed relative to the stationary incident laser beam (102), laser irradiation mills the first layer (303). After the layer is milled-off the laser beam (102) is defocused. The laser beam (102) defocus position is mapped and predefined before the feature fabrication. Then the laser beam (102) is refocused at obtained bottom of the milled cavity and the body (107) is translated again in the horizontal direction (109) and the second layer (304) of material is milled. The procedure is repeated several times and several more layers (305, 306, 307) are milled. The transverse shape of each layer in layer-by-layer slicing is different from layer to layer according to a pre-set three-dimensional shape.

In all cases of the invention, the vertical (110) position of the body (107) and the focal position of the laser beam (102) is not changed during the milling procedure of the first layer.

The quality of the laser-milled edge can be controlled by controlling the number of layers as shown in Fig. 5. In the cross-sectional side view of the layer-by-layer milling of a triangular shape cavity at a different number of layers is depicted: one layer cavity (a); two layers cavity (b), four layers cavity (c), nine layers cavity (d), nineteen layers cavity (e), thirty-nine layers cavity (f). The quality of steeped sidewalls increases with increasing numbers of layers per cavity. The CAD model of the cavity shape is sliced into multiple separate layers to utilize layer-by-layer milling.

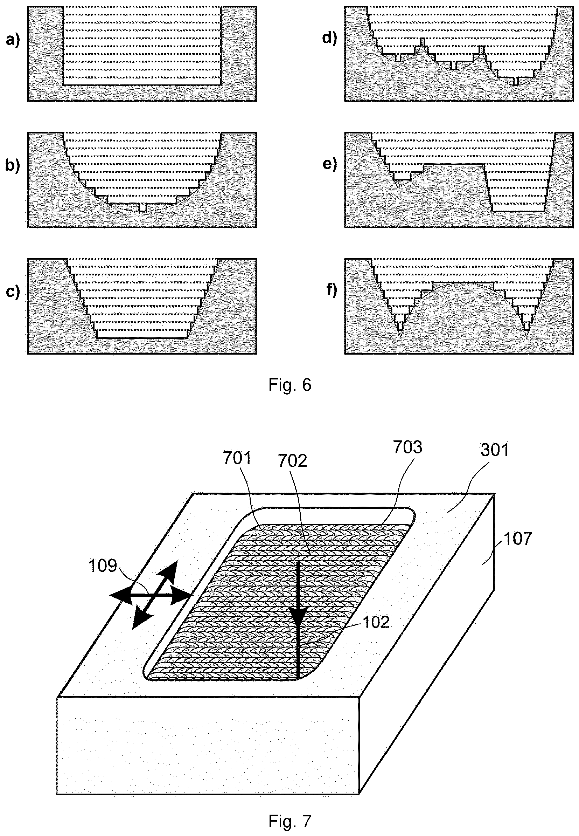

The cavities with a large variety of any type of different shapes can be achieved by laser layer-by-layer milling technique as shown in Fig. 6. In the cross-sectional side view different examples of cavity shapes are depicted: rectangular (a); semi-spherical (b); trapezoidal (c); complex multi-ellipsoid (d); complex (e) triangular, rectangular, and trapezoidal; complex (f) trapezoidal, and inverse half-sphere.

An example of a milled single-layer rectangular cavity in 3D perspective is shown in Fig. 7. The laser beam spot (701) is scanned on the surface and the pulse overlapped pattern (702) is created on the bottom (703) of the cavity. The uniform layer of material is removed by the laser ablation process. The overlapping pattern is created by selecting beam scanning speed, pulse overlap, laser spot size, and hatching distance for uniform removal of the material. Specific laser processing parameters, such as the wavelength of irradiation, pulse energy, pulse repetition rate, output power, and laser fluence are selected for optimal fabrication conditions and maximal material removal rate.

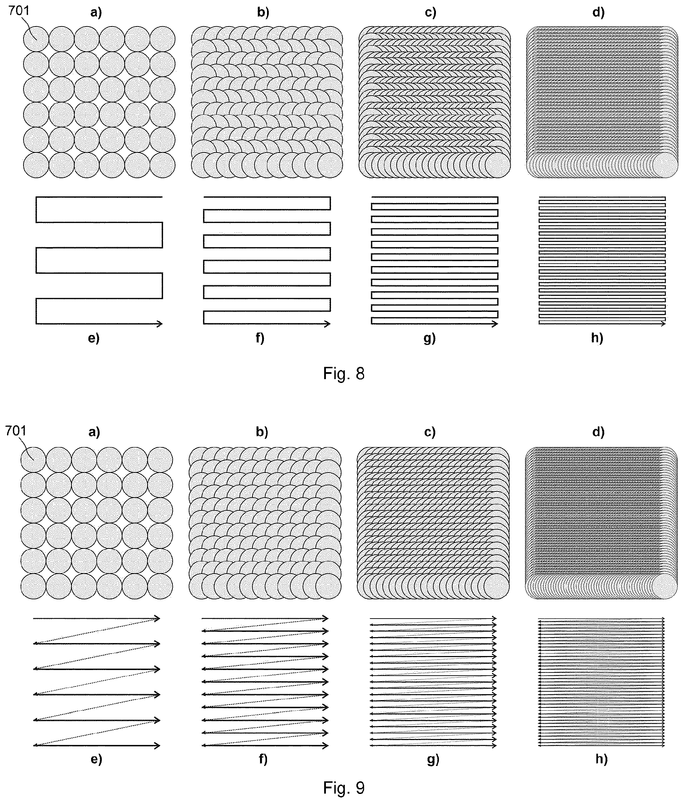

The top view of examples of bidirectional laser beam spot (701) scanning trajectories and schemes of partially overlapping laser pulses is shown in Fig. 8. The bidirectional snake scan trajectories are indicated with different pulse and line overlap percentages: (a) - 0% pulse overlap and 0% line overlap; (b) - 50% pulse overlap and 50% line overlap; (c) - 75% pulse overlap and 75% line overlap; (d) - 90% pulse overlap and 90% line overlap. The bidirectional snake scan trajectories are indicated with different hatch distances: (e) - hatch distance equal to spot diameter; (f) - hatch distance is equal to half of spot diameter; (g) - hatch distance is equal to one-quarter of spot diameter; (h) - hatch distance one-tenth of spot diameter. The bidirectional scanning trajectories, which have much shorter jumping distances, but, slightly less symmetrical overlap pattern than unidirectional trajectories, are usually chosen when working with the computer-controlled linear stages (111) which has a small jump speed that is comparable with scanning speed, thus, much shorter jumping distance makes the processing faster.

The top view of examples of unidirectional laser beam spot (701) scanning trajectories and schemes of partially overlapping laser pulses is shown in Fig. 9. The unidirectional scan trajectories are indicated with different pulse and line overlap percentages: (a) - 0% pulse overlap and 0% line overlap; (b) - 50% pulse overlap and 50% line overlap; (c) - 75% pulse overlap and 75% line overlap; (d) - 90% pulse overlap and 90% line overlap. The unidirectional scan trajectories are indicated with different hatch distances: (e) - hatch distance equal to spot diameter; (f) - hatch distance is equal to half of spot diameter; (g) - hatch distance is equal to one-quarter of spot diameter; (h) - hatch distance one-tenth of spot diameter. The unidirectional scanning trajectories, which have a slightly more symmetrical overlap pattern, however, much longer jumping distances than bidirectional trajectories, are usually chosen when working with the computer-controlled galvanometric scanners (205) which have a jumping speed much larger than the scanning speed, thus, much longer jumping distances does not make the processing much slower.

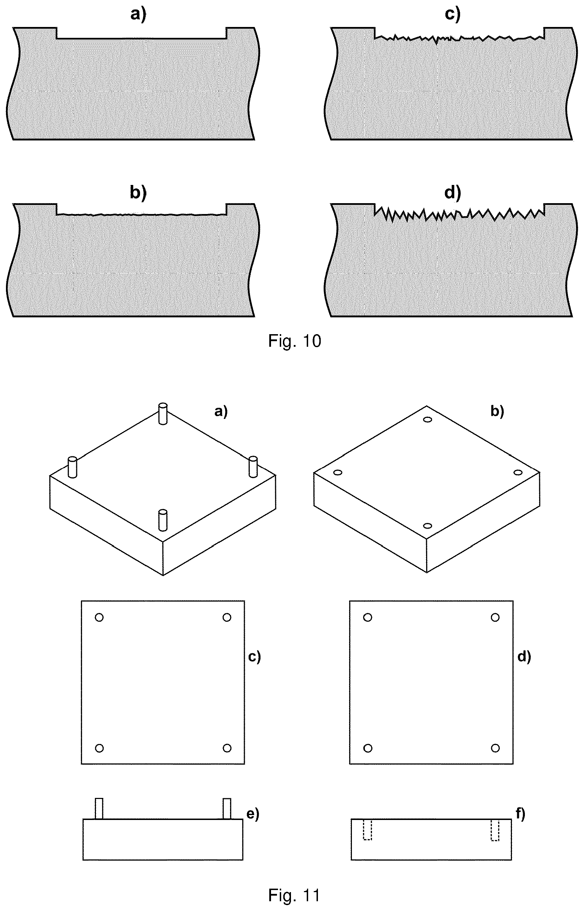

The side view of a laser-milled single-layer cavity is shown in Fig. 10. A with different finishing qualities are depicted: (a) - extremely efficient laser milling and polishing with almost zero surface roughness which is equal to initial mirror polish surface roughness; (b) - efficient laser milling with very small surface roughness slightly larger than initial roughness of polished surface; (c) - moderately effective laser milling with poor quality and high surface roughness; (d) - inefficient laser milling with a rough surface.

Throughput is significantly higher than that of conventional laser ablation and resulting in high machining quality and consequent low surface roughness. The smoothness of the bottom surface of the laser-milled cavity is comparable to the original surface smoothness of a mirror-polished material. The milling process may be utilized to create cavities with any three-dimensional shape, particularly for applications involving the milling of LED diffuser molds.

A CNC-milled mold blank designed for laser milling of LED diffuser mold is shown in Fig. 11 The drawings at different projections depicted: (a) and (b) three-dimensional views of the bottom and top parts: (c) and (d) top view of the bottom and top parts; (e) and (f) side view of the bottom and top parts.

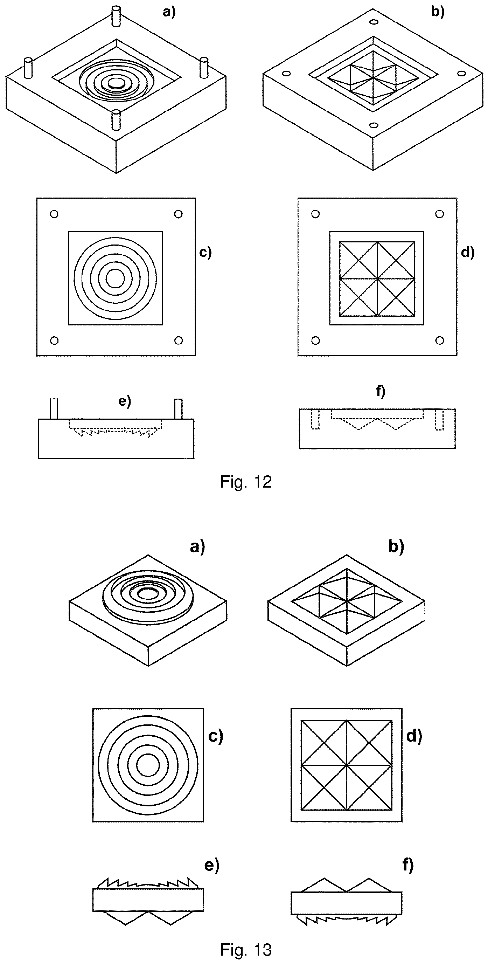

CNC-milled mold blank with laser-milled cavities designed for LED diffuser mold is shown in Fig. 12. The drawings at different projections depicted: (a) and (b) three-dimensional views of bottom and top parts with laser-milled inverted Fresnel lens and inverted pyramid prisms: (c) and (d) top view of the bottom and top parts with milled inverted Fresnel lens and inverted pyramid prisms; (e) and (f) side view of the bottom and top parts with laser milled inverted Fresnel lens and inverted pyramid prisms.

De-molded LED diffuser parts are shown in Fig. 13. The drawings at different projections depicted: (a) and (b) three-dimensional views of Fresnel lens and pyramid prisms; (c) and (d) top views of Fresnel lens and pyramid prisms; (e) and (f) side view of Fresnel lens and pyramid prisms. Molds obtained by method according to the invention for the manufacture of LED secondary optics and LED diffusers are advantageous because the secondary optics do not allow for total internal reflection, but instead allow for controlled passage of the light and the scattering of the light over the diffuser's outer surface.

Example of ablation efficiency curve is shown in Fig. 15. The plot (1501) depicts normalized laser pulse energy per ablated volume (1502) dependence on normalized laser fluence (1503). Curve has a minimal point with indicated optimal normalized fluence (1504) for the lowest laser pulse energy per ablated volume used (1505).

Although numerous characteristics and advantages together with structural details and features have been listed in the present description of the invention, the description is provided as an example of fulfilment of the invention. Without departing from the principles of the invention, there may be changes in the details, especially in the form, size, and layout, following the most widely understood meanings of the concepts and definitions used in claims.

## Claims

1. A method for forming a three-dimensional cavity comprising positioning and focusing a laser beam spot onto a target area of a body of opaque material to achieve laser ablation **characterized in that** the method comprises:
- focusing or partially focusing the laser beam (102) in a spot (108) on a surface of the body (107) of opaque material by controlling the laser spot (108) size of the laser beam (102) and its related laser energy density on the surface of the body (107) of the opaque material by adjusting position of a focusing lens (106, 206) vertically (110) with respect to the body (107) surface, or by adjusting body (107) position in the vertical direction (110) with respect to the focusing lens (106, 206),
- scanning surface of the body (107) of opaque material for removal of a first layer of the opaque material with the laser beam spot (108) by means (205, 206, 111) for control of laser beam spot (108) positioning on the body (107) of opaque material in horizontal direction (109, 209) on the body (107) of opaque material, where the scanning direction is perpendicular to the direction of propagation of the laser beam (102) after the beam exits the focusing lens (106, 206) and the laser energy density exceeds the opaque material of the body (107) removal threshold energy density,
- defocusing the laser beam (102) by repositioning the laser beam spot (108) in a horizontal direction (109, 209) on the body (107) of opaque material using means (205, 206, 111) for control of laser beam spot (108) positioning on the body (107) of opaque material in horizontal direction (109, 209) on the body (107) of opaque material,
- refocusing or partially refocusing the laser beam (102) on the new surface of the body (107) of the opaque material after removing the first layer of the opaque material for the subsequent scanning and ablation step by adjusting the focusing lens (106, 206) position vertically (110) with respect to the body (107) surface or by adjusting body (107) position in the vertical direction (110) with respect to the focusing lens (106, 206),
- scanning the opaque material (107) with the laser beam spot (108) by means (205, 206, 111) for control of laser beam spot (108) positioning on the body (107) of opaque material in horizontal direction (109, 209) on the body (107) of opaque material, where the scanning direction is perpendicular to the direction of propagation of the laser beam (102) after the laser beam exits the focusing lens (106, 206) and the laser energy density exceeds the material removal threshold energy density,
- repeating said focusing or partial focusing, scanning, defocusing and refocusing or partial refocusing and scanning for removal of each subsequent layer of opaque material.

2. The method according to claim 1, **characterized in that** the laser beam (102) fluence is 7.39 times larger than the ablation threshold of the opaque material of the body (107).

3. The method according to claim 1 or 2, **characterized in that** the defocus control of the laser beam (102) on to the body (107) surface is utilized by moving the body (107) of the opaque material horizontally (109) in a perpendicular direction to the laser beam (102) after the laser beam (102) exits the optical focusing lens (106).

4. The method according to claim 1 or 2, **characterized in that** the defocus control of the laser beam spot (108) is utilized by moving a galvanometer scanner (205) together with the optical focusing lens (206) horizontally (209) with respect to the milled surface of the body (107).

5. The method according to claim 1 or 2, **characterized in that** the defocus control of the laser beam spot (108) is utilized by altering the laser beam (102) collimation with respect to the optical focusing lens (106, 206).

6. The method according to any one of the previous claims, **characterized in that** the position of the defocused laser beam spot (108) is mapped and predefined before the feature fabrication.

7. The method according to claim 3, **characterized in that** during scanning the laser beam spot (108) is translated across the surface of a body (107) of the opaque material in a horizontal direction (109) by a computer-controlled stage (111).

8. The method according to any previous claims, **characterized in that** a CAD model of the milled shape is compiled for control of the milling path of the laser beam spot (108) and layer-by-layer milling with refocusing or partial refocusing of the laser beam (102) comprising slicing the CAD model of the cavity shape of multiple separate layers, where transverse shape of each layer in layer-by-layer slicing is different from layer to layer according to the three-dimensional shape of the cavity and the CAD model slicing.

9. The method according to any one of the previous claims, **characterized in that** steepness and quality of the milled cavity edge is determined by number of layers, where quality of the edge of increases with an increasing number of removed layers.

10. The method according to any one of claims 1-9, **characterized in that** a single laser-milled layer is formed by partially overlapping laser pulses of the laser beam (102) in a pattern.

11. The method according to any one of claims 1-9, **characterized in that** that the laser beam (102) scanning comprises partially overlapping pulses in a bidirectional snake-like trajectory.

12. A method according to any one of claims 1-9, **characterized in that** that the laser beam (102) scanning comprises partially overlapping pulses in a unidirectional parallel line scanning trajectory.

13. A system for forming a three-dimensional cavity comprising a laser beam radiation source, at least one reflective mirror, a laser beam diameter modification means, an optical laser beam focusing lens, means for control of laser beam spot translation direction on a body in horizontal direction on the body of opaque material **characterized in that** the system further comprises vertical (110) adjustment means (106, 206, 111) for controlling the laser spot (108) size of the laser beam (102) and its related laser energy density on the surface of the body (107) of the opaque material for focusing or partial focusing and refocusing or partial refocusing of a laser beam (102) on a surface of the body (107) of the opaque material, and defocus means (111, 205) of the laser beam (102) for shifting position of the spot (108) of the laser beam (102) horizontally (109) across the surface of the body (107).
